# EUROPÄISCHE PATENTSCHRIFT

(11) **EP 2 683 747 B1**
(45) Veröffentlichungstag und Bekanntmachung des Hinweises auf die Patenterteilung: **03.12.2014**
(21) Anmeldenummer: 12708324.4
(22) Anmeldetag: 09.03.2012
(51) Int. Cl.: C08F 2/22, B01J 8/20, B01J 8/22, B01J 19/26, C04B 24/26, C04B 28/02, B01J 8/18, C04B 111/00, C04B 103/00

(54) **VERFAHREN ZUR HERSTELLUNG VON POLYMERISATEN MITTELS EMULSIONS- ODER SUSPENSIONSPOLYMERISATION IN EINEM STRAHLSCHLAUFENREAKTOR**
PROCESS FOR PRODUCING POLYMERS BY MEANS OF EMULSION OR SUSPENSION POLYMERIZATION IN A JET LOOP REACTOR
PROCÉDÉ DE PRODUCTION DE POLYMÈRES PAR POLYMÉRISATION EN ÉMULSION OU EN SUSPENSION DANS UN RÉACTEUR À JET ET À BOUCLE DE CIRCULATION

(30) Priorität: 10.03.2011 DE 102011005388
(43) Veröffentlichungstag der Anmeldung: 15.01.2014
(73) Patentinhaber: Wacker Chemie AG, 81737 München (DE)
(72) Erfinder: KUTSCHERA, Dirk, 84489 Burghausen (DE); EISENLAUER, Josef, 84489 Burghausen (DE); HERGETH, Wolf-Dieter, 84387 Julbach (DE); WEITZEL, Hans-Peter, 84571 Reischach (DE); WIEDEMANN, Mathias, 55606 Hochstetten-Dhaun (DE)
(74) Vertreter: Ege, Markus
(86) Internationale Anmeldenummer: PCT/EP2012/054162
(87) Internationale Veröffentlichungsnummer: WO 2012/120136

(56) Entgegenhaltungen:
- EP-A1- 0 054 814
- EP-A1- 0 834 518
- EP-A1- 1 174 445
- EP-A1- 1 923 379
- WO-A1-2005/103116
- WO-A2-2004/096741
- DE-A1-102007 038 332
- DE-A1-102007 040 850

## Beschreibung

Die vorliegende Erfindung betrifft Verfahren zur Herstellung von Polymerisaten in Form deren wässrigen Dispersionen oder in Wasser redispergierbaren Pulvern mittels radikalisch initiierter Emulsions- oder Suspensionspolymerisation von ethylenisch ungesättigten Monomeren.

Die Emulsions- oder Suspensionspolymerisation von ethylenisch ungesättigten Monomeren kann nach Batch-, Semibatch- oder kontinuierlichen Verfahren durchgeführt werden. Batch- oder Semibatch-Verfahren werden hierbei für gewöhnlich in Rührreaktoren durchgeführt und kontinuierliche Verfahren in Rührkesselkaskaden, Rohrreaktoren bzw. Loop-Reaktoren. So beschreibt die US-A 3551396 Verfahren zur Herstellung von Polyvinylacetat-Dispersionen in einem Loopreaktor, bei dem Monomer und Wasser kontinuierlich im Kreis geführt werden, wobei zusätzliches Monomer und Initiator laufend zudosiert und gebildetes Polymerisat laufend aus dem Reaktor entnommen werden.

EP 1 174 445 offenbart ein Verfahren zur Herstellung von mit Polyvinylalkohol stabilisierten Polymerisaten auf Basis von Vinylester, Ethylen und gegebenenfalls weiteren Comonomeren in Form deren wässrigen Polymerdispersionen oder in Wasser redispergierbaren Polymerpulver mittels radikalisch initiierter kontinuierlicher Emulsionspolymerisation und gegebenenfalls Trocknung der dabei erhaltenen Polymerdispersion.

DE 10 2007 040 850 offenbart ein Verfahren zur Herstellung von Schutzkolloidstabilisierten Polymerisaten mittels Emulsionspolymerisation in einem Reaktor mit einem externen Kühlkreislauf.

DE 10 2007 038 332 offenbart ein Verfahren zur Herstellung von mit Polymerisaten auf Basis von Vinylester, Ethylen in Form deren wässrigen Polymerdispersionen oder in Wasser redispergierbaren Polymerpulver mittels radikalisch initiierter kontinuierlicher Emulsionspolymerisation und gegebenenfalls Trocknung der dabei erhaltenen Polymerdispersion.

In der US-A 2703794 werden Verfahren zur kontinuierlichen Emulsionspolymerisation von Vinylacetat und Ethylen in Gegenwart von Emulgator und gegebenenfalls mit Wasser mischbarem organischen Lösungsmittel beschrieben. Nachteilig sind oszillierende Verfahrensparameter und in Folge dessen Bildung von Polymeren mit unterschiedlichen Teilchengrößenverteilungen. In der DE-A 2555142 wird ein kontinuierliches Verfahren zur Herstellung von Polymerisaten ethylenisch ungesättigter Monomere nach dem Emulsionspolymerisationsverfahren in mehreren hintereinandergeschalteten Polymerisationsreaktoren beschrieben. In der EP-A 834518 wird ein diskontinuierliches Polymerisationsverfahren beschrieben, bei dem die Polymerisation in einem Reaktor mit einem externen Kühlkreislauf abläuft, bei dem zwingend eine scherungsarme Pumpe eingesetzt werden muss, um die Produkte nicht zu beeinträchtigen. In der WO-A 03/006510 wird ein diskontinuierliches Polymerisationsverfahren in einem Polymerisationsreaktor mit einem externen Kühlkreislauf beschrieben, bei dem der Polymerisationsansatz mit einer scherungsarme Zylinder- oder Schlauchmembranpumpe im Kreis gepumpt wird, um die Produkte nicht durch Scherung zu beeinträchtigen. In der WO-A 02/59158 wird ein Polymerisationsverfahren in einem Reaktor mit externem Kühlkreislauf beschrieben, bei dem der Polymerisationsansatz im Kreis gepumpt wird, und zumindest eine Teilmenge des Monomeren in den externen Kreislauf eindosiert werden muss. Nachteilig bei den diskontinuierlichen Polymerisationsverfahren, bei denen großvolumige Ansätze mit dispergierten Polymerteilchen umgepumpt werden müssen, ist deren Anfälligkeit zur Koagulation aufgrund der mit der Pumpe eingebrachten Scherkräfte.

Um Polymerisate mit unterschiedlichen mittleren Teilchengrößen bzw. unterschiedlichen Teilchengrößenverteilungen herzustellen, ist es jedoch im Allgemeinen erforderlich, die Rezepturen der Polymerisationskomponenten zu variieren oder wesentliche Änderungen an den Polymerisationsbedingungen oder Polymerisationsverfahren vorzunehmen.

Des Weiteren ist es insbesondere im Falle von kontinuierlichen Emulsions- oder Suspensionspolymerisationsverfahren ein Problem, über die gesamte Dauer der Polymerisation konstante Polymerisationsbedingungen einzustellen und somit ein Oszillieren der Verfahrensparameter zu unterbinden, damit über die gesamte Dauer der Polymerisation Polymere mit denselben Eigenschaften entstehen.

Vor diesem Hintergrund bestand die Aufgabe, neue Verfahren zur Emulsions- oder Suspensionspolymerisation von ethylenisch ungesättigten Monomeren bereitzustellen, mit denen die Produkteigenschaften von Polymeren, wie mittlere Partikelgrößen oder die Breite der Partikelgrößenverteilung, durch technisch einfache Maßnahmen gezielt variiert werden können. Insbesondere sollten gewichtsmittlere Partikelgrößenverteilungen von ≤ 1µm erhalten werden, auch mit Rezepturen, die in herkömmlichen Verfahren gewichtsmittlere Partikelgrößenverteilungen > 1 µm liefern (Bestimmung mittels Laserlichtbeugung nach ISO 13320). Des Weiteren sollte ein Oszillieren der Verfahrensparameter unterbunden werden.

Überraschenderweise wurde diese Aufgabe durch Durchführung der Emulsions- oder Suspensionspolymerisationen von ethylenisch ungesättigten Monomeren in Strahlschlaufenreaktoren gelöst.

Emulsionspolymerisation und Suspensionspolymerisation werden im folgenden auch gemeinsam als Heterophasenpolymerisation bezeichnet.

Gegenstand der Erfindung sind Verfahren zur Herstellung von Polymerisaten in Form deren wässrigen Dispersionen oder in Wasser redispergierbaren Pulvern durch radikalisch initiierter Heterophasenpolymerisation von einem oder mehreren ethylenisch ungesättigten Monomeren und gegebenenfalls anschließender Trocknung der dabei erhaltenen Polymerdispersionen, dadurch gekennzeichnet, dass die Heterophasenpolymerisation in einem Strahlschlaufenreaktor durchgeführt wird.

Beispiele für Strahlschlaufenreaktoren sind Kompakt-, Prallstrahl- oder Strahlzonen-Schlaufenreaktoren. Strahlschlaufenreaktoren an sich und deren Aufbau sind bekannt und beispielsweise beschrieben in P. Zehner, Bubble Columns 4. Jet Loop Reactors, Ullmann's Encyclopedia of Industrial Chemistry, Article Online Posting Date 15.06.2000.

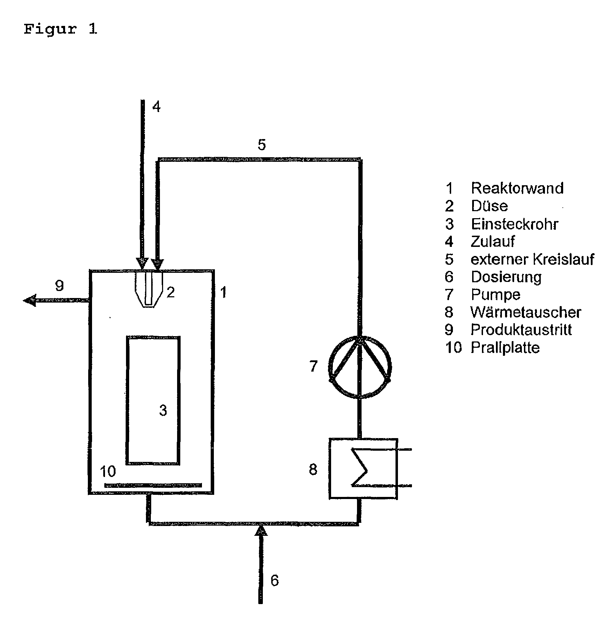

Eine bevorzugte Ausgestaltung des erfindungsgemäßen Verfahrens ist in Figur 1 beispielhaft dargestellt.

Der Strahlschlaufenreaktor (Figur 1) enthält im Allgemeinen ein oder mehrere Düsen (2), ein oder mehrere Einsteckrohre (3), gegebenenfalls einen oder mehrere Zuläufe (4), gegebenenfalls einen oder mehrere Produktaustritte (9), gegebenenfalls eine oder mehrere Prallplatten (10), gegebenenfalls ein oder mehrere externe Kreisläufe (5) und gegebenenfalls weitere Bauten, wie beispielsweise Kühler, insbesondere Mantelkühler. Ein externer Kreislauf (5) umfasst beispielsweise ein oder mehrere Pumpen (7), ein oder mehrere Dosierungen (6) und gegebenenfalls ein oder mehrere Wärmetauscher (8).

Die Düse (2) befindet sich im Allgemeinen ganz oder teilweise innerhalb des Strahlschlaufenreaktors. Düse (2), Einsteckrohr (3) und gegebenenfalls die Prallplatte (10) sind im Allgemeinen linear, vorzugsweise in vertikaler Ausrichtung, zueinander angeordnet. Auf Grund dieser Anordnung wird das Polymerisationsmedium nach Einführung durch die Düse (2) durch das Einsteckrohr (3) geführt und im Bereich des Reaktorbodens oder der Prallplatte (10) umgelenkt, und das Polymerisationsmedium strömt im Bereich zwischen Einsteckrohr (3) und Reaktorwand (1) weiter, so dass schließlich innerhalb des Strahlschlaufenreaktors um das Einsteckrohr (3) eine Strömung induziert wird. Dadurch werden flüssige wie gasförmige, gelöste, emulgierte oder dispergierte Bestandteile des Polymerisationsmediums im Reaktor umgewälzt und dadurch intensiv gemischt, so dass eine sehr homogene Durchmischung des Polymerisationsmediums bewirkt wird.

Falls der Strahlschlaufenreaktor mehrere Düsen (2) hat, so sind diese vorzugsweise nebeneinander, insbesondere parallel oder horizontal angeordnet. Auch bei Vorliegen von mehreren Einsteckrohren (3) sind diese vorzugsweise nebeneinander, insbesondere parallel oder horizontal angeordnet.

Ein oder mehrere externe Kreisläufe (5) sind an den Strahlschlaufenreaktor angeschlossen, wenn dem Strahlschlaufenreaktor ein Teil des Polymerisationsmediums entnommen und in den Strahlschlaufenreaktor zurückgeführt werden soll. Das Polymerisationsmedium kann an einer beliebigen Stelle des Strahlschlaufenreaktors entnommen werden. Vorzugsweise wird das Polymerisationsmedium am Boden des Strahlschlaufenreaktors, insbesondere unterhalb der Prallplatte (10), entnommen. Vom externen Kreislauf wird das Polymerisationsmedium vorzugsweise durch die Düse (2) in den Strahlschlaufenreaktor zurückgeführt. Auf diese Weise kann eine homogene Durchmischung des Polymerisationsmediums erreicht werden. Über Dosierung (6) können weitere Edukte, wie beispielsweise ein oder mehrere ethylenisch ungesättigte Monomere und/oder ein oder mehrere Initiatoren zudosiert werden. Mittels Wärmetauscher (8) kann das im externen Kreislauf (5) befindliche Polymerisationsmedium temperiert werden. Die Förderung des Polymerisationsmediums durch den externen Kreislauf (5) kann mittels einer oder mehrerer Pumpen (7) erfolgen.

Der Betrieb eines externen Kreislaufs wird im folgenden auch als Rückführung bezeichnet.

Ein wesentlicher Vorteil des erfindungsgemäßen Verfahrens besteht darin, dass durch technisch einfach ausführbare Variationen der Betriebsparameter der Strahlschlaufenreaktoren die Eigenschaften der Polymerisate, wie mittlere Partikelgrößen oder Partikelgrößenverteilung, beeinflusst werden können. Die Treibstrahlgeschwindigkeit, d.h. die Geschwindigkeit, mit der das Polymerisationsmedium durch die Düse (2) tritt, beträgt vorzugsweise von 3 bis 25 m/s und besonders bevorzugt von 5 bis 15 m/s. Das Verhältnis von Reaktorhöhe zu Reaktordurchmesser beträgt vorzugsweise von 1 bis 15 und besonders bevorzugt von 2 bis 7. Das Verhältnis von Reaktordurchmesser zu Düsendurchmesser (2) beträgt vorzugsweise von 10 bis 1000 und besonders bevorzugt von 20 bis 100.

Der Strahlschlaufenreaktor kann nach Batch-, Semibatch- oder kontinuierlichen Verfahren, gegebenenfalls mit Rückführung, betrieben werden. Insbesondere das kontinuierliche Verfahren kann auch ohne Rückführung betrieben werden.

Im kontinuierlichen Betrieb ohne Rückführung werden während der Heterophasenpolymerisation über den Zulauf (4) Edukte, insbesondere ethylenisch ungesättigte Monomere und Initiator zugeführt und über den Produktaustritt (9) Polymerisationsmedium abgeführt, aus dem dann die Polymerisate isoliert werden können. Bei kontinuierlichem Betrieb sollen die eintretenden Massenströme den austretenden Massenströmen entsprechen. Bei kontinuierlichem Betrieb ohne Rückführung ist also vorzugweise kein externer Kreislauf (5) eingebaut.

Im kontinuierlichen Betrieb mit Rückführung werden während der Heterophasenpolymerisation über den Zulauf (4) oder über Dosierung (6) Edukte, insbesondere ethylenisch ungesättigte Monomere und Initiator zugeführt und über den Produktaustritt (9) Polymerisationsmedium abgeführt, aus dem dann die Polymerisate isoliert werden können. Bei kontinuierlichem Betrieb sollen die eintretenden Massenströme den austretenden Massenströmen entsprechen.

Bei Semibatch-Verfahren bzw. bei Batch-Verfahren sind an den Strahlschlaufenreaktor im Allgemeinen ein oder mehrere externe Kreisläufe (5) angebaut. Bei Semibatch-Verfahren werden über den Zulauf (4) und/oder gegebenenfalls Dosierung (6) Edukte, insbesondere ethylenisch ungesättigte Monomere und Initiator zugeführt, jedoch wird kein Polymerisationsmedium über den Produktaustritt (9) abgeführt. Bei Batch-Verfahren werden während der Heterophasenpolymerisation weder Edukte, wie ethylenisch ungesättigte Monomere, über den Zulauf (4) zugeführt, noch Polymerisationsmedium über den Produktaustritt (9) abgeführt.

Bevorzugt sind das Semibatch-Verfahren und insbesondere das kontinuierliche Verfahren mit Rückführung.

Die Befüllung des Strahlschlaufenreaktors mit Edukten oder das Einbringen von Edukten in den Strahlschlaufenreaktor erfolgt im Allgemeinen über die Düse (2). Als Düse (2) werden Mehrstoffdüsen, insbesondere Zweistoffdüsen, bevorzugt. Zweistoffdüsen verfügen über zwei Einlässe, über die vorzugsweise zum einen Edukt und zum anderen das Medium eines externen Kreislaufs (5) geleitet wird, und über einen Auslass, durch den das Polymerisationsmedium in den Strahlschlaufenreaktor eingebracht wird.

Aus Produktaustritt (9) kann Polymerisationsmedium und das darin enthaltene Polymerisationsprodukt entnommen werden.

Die Temperaturregelung, d.h. das Heizen oder Kühlen, kann mittels einem oder mehreren Wärmetauschern erfolgen, die in den externen Kreislauf (5) eingebaut oder direkt am Strahlschlaufenreaktor angebracht sein können. Hierfür können die gängigen Wärmeaustauscher eingesetzt werden, wie Mantelkühler Mantelheizer, Rohrbündelwärmetauscher oder Plattenwärmetauscher.

In einer bevorzugten Ausführungsform ist der Strahlschlaufenreaktor in eine Kaskade umfassend weitere Reaktoren eingebaut. Eine Kaskade enthält also mindestens zwei in Reihe geschaltete Reaktoren. Das Polymerisationsmedium kann dem ersten Reaktor an einer beliebigen Stelle entnommen und dem zweiten Reaktor an einer beliebigen Stelle zugeführt werden. Im Falle von Strahlschlaufenreaktoren wird das Polymerisationsmedium vorzugsweise dem Produktaustritt (9) des ersten Reaktors entnommen und in den zweiten Reaktor geleitet. Wenn der zweite Reaktor ein Strahlschlaufenreaktor ist, wird das Polymerisationsmedium vorzugsweise über eine Dosierung (6) eines externen Kreislaufs (5) oder gegebenenfalls über den Zulauf (4) in den Strahlschlaufenreaktor eingeführt.

Bevorzugte Kaskaden enthalten zwei oder mehr Strahlschlaufenreaktoren; oder ein oder mehrere Strahlschlaufenreaktoren und ein oder mehrere Strahlzonen-Schlaufenreaktoren; oder ein oder mehrere Strahlschlaufenreaktoren und ein oder mehrere Airliftschlaufenreaktoren; oder ein oder mehrere Strahlschlaufenreaktoren und einen oder mehrere Rührkessel. In den Kaskaden kann jeder der Reaktoren in einen oder mehrere externe Kreisläufe (5) eingebaut sein.

Vor Beginn der Polymerisation wird der Strahlschlaufenreaktor vorzugsweise zu 50 bis 80% des Volumens mit einer Polymerdispersion befüllt, welche vorzugsweise dem Endprodukt der Polymerisation bezüglich Polymerzusammensetzung, Art und Menge des Schutzkolloids sowie Teilchengröße und Festgehalt entspricht. Dies kann so erfolgen, dass derartige Dispersionen in den Strahlschlaufenreaktoren mittels Batch-Polymerisation hergestellt werden, oder die Strahlschlaufenreaktoren mit einer separat hergestellten Dispersion befüllt werden.

Über Zulauf (4) oder die Dosierung (6) werden üblicherweise die einzelnen Edukte des Polymerisationsansatzes, wie ethylenisch ungesättigte Monomere, Initiatoren, Schutzkolloide oder Saat zugegeben. Die Edukte können einzeln oder in vorgemischter Form, in Reinsubstanz oder in Form einer Lösung, Suspension oder Emulsion zugegeben werden. Vorzugsweise werden die Edukte in einer vorgeschalteten Mischeinheit vorgemischt.

Alle Monomere sowie der Schutzkolloidanteil können über den Zulauf (4) oder im externen Kreislauf (5) über ein oder mehrere, räumlich vor oder nach einem Wärmetauscher (8) angeordnete Dosierungen (6) dosiert werden.

Die Polymerisation wird mit einem gängigen Initiator, insbesondere einem Redoxsystem aus Oxidations- und Reduktionskomponente initiiert. Die Reduktionskomponente wird vorzugsweise vollständig über den Zulauf (4) zudosiert. Der Monomerumsatz wird im Allgemeinen über die Initiatordosierung gesteuert.

Die Verweilzeit des Polymerisationsmediums im Strahlschlaufenreaktor kann in kontinuierlicher Betriebsweise durch Einstellung der Dosierungen frei gewählt werden.

Die Polymerisation kann unter Umgebungsdruck oder auch bei einem relativ zur Umgebung erhöhten Druck, insbesondere bei 10 bis 80 bar, durchgeführt werden.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation.

Vorzugsweise wird hierzu nach Abschluss der Polymerisation in einem unter Überdruck betriebenen Reaktor zur Nachpolymerisation und/oder ein unter Umgebungsdruck betriebener Schlaufenreaktor, insbesondere ein Strahlschlaufenreaktor oder Strahlzonen-Schlaufenreaktor oder eine Kaskade aus einem Strahlschlaufenreaktor und einem Airliftschlaufenreaktor, eingesetzt.

Flüchtige Bestandteile, wie Restmonomere, können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die ethylenisch ungesättigten Monomere werden vorzugsweise ausgewählt aus der Gruppe umfassend Vinylester, (Meth)-acrylsäureester, Vinylaromaten, Olefine, 1,3-Diene und Vinylhalogenide und gegebenenfalls weiteren damit copolymerisierbaren Monomeren.

Geeignete Vinylester sind beispielsweise solche von Carbonsäuren mit 1 bis 18 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{®} oder VeoVa10^{®} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Mehylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beipielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden ein oder mehrere Monomere ausgewählt aus der Gruppe umfassend Vinylester, Vinylester-Gemische enthaltend eine oder mehrere Monomere aus der Gruppe umfassend Vinylester, Olefine, Vinylaromaten, Vinylhalogenide, Acrylsäureester, Methacrylsäureester, Fumar- und/oder Maleinsäuremono- oder -diester; (Meth)acrylsäureester-Homopolymerisate, (Meth)acrylsäureester-Gemische enthaltend eine oder mehrere Monomere aus der Gruppe umfassend Methacrylsäureester, Acrylsäureester, Olefine, Vinylaromaten, Vinylhalogenide, Fumar- und/oder Maleinsäuremono- oder -diester; Monomere oder Monomergemische von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Monomere oder Monomergemische aus Vinylaromaten, wie Styrol, Methylstyrol, Vinyltoluol; Monomere oder Monomergemische aus Vinylhalogenverbindungen wie Vinylchlorid, wobei die Monomergemische noch Hilfsmonomere umfassen können.

Besonders bevorzugt werden Monomergemische aus von einem oder mehreren Vinylestern mit 1 bis 50 Gew.-% Ethylen; Monomergemische von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Monomergemische von einem oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Monomergemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Monomergemische mit einem oder mehreren Vinylestern, 1 bis 50 Gew.-% Ethylen und 1 bis 60 Gew.-% Vinylchlorid; wobei die Monomergemische noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Monomergemische, wie Monomergemische von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Monomergemische mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Monomergemische mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Monomergemische ; wobei die Monomergemische noch Hilfsmonomere in den genannten Mengen enthalten können, und sich die Angaben in Gew.-% auf jeweils 100 Gew.-% aufaddieren.

Beispiele für besonders bevorzugte Comonomere für Vinylchlorid-Monomergemische sind α-Olefine, wie Ethylen oder Propylen, und/oder Vinylester, wie Vinylacetat, und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl-, Methyl-t-butyl-, Di-n-butyl-, Di-t-Butyl- und Diethylester der Maleinsäure bzw. Fumarsäure.

Am meisten bevorzugt werden Monomergemische mit Vinylacetat und 5 bis 50 Gew.-% Ethylen; oder Monomergemische mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Monomergemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Monomergemische mit Vinylacetat, 5 bis 50 Gew.-% Ethylen und 1 bis 60 Gew.-% Vinylchlorid.

Am meisten bevorzugte Monomergemische sind auch Vinylchlorid-Ethylen-Monomergemische enthaltend 60 bis 98 Gew.-% Vinylchlorideinheiten und 1 bis 40 Gew.-% Ethyleneinheiten, wobei sich die Angaben in Gew.-% auf das Gesamtgewicht der Monomergemische beziehen und sich jeweils auf 100 Gew.-% addieren.

Die Monomerauswahl bzw. die Auswahl der Gewichtsanteile der Comonomere erfolgt dabei so, dass im allgemeinen eine Glasübergangstemperatur Tg von -50°C bis +50°C, bevorzugt von - 20°C bis +30°C, resultiert. Die Glasübergangstemperatur Tg der Polymerisate kann in bekannter Weise mittels Differential Scanning Colorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht und TGn die Glasübergangstemperatur in Kelvin des Homopolymeren des Monomeren n ist. Tg-Werte für Homopolymerisate sind in Polymer Handbook 2nd Edition, JU. Wiley & Sons, New York (1975) aufgeführt.

Die Polymerisation erfolgt nach dem Suspensionspolymerisationsverfahren oder vorzugsweise nach dem Emulsionspolymerisationsverfahren. Die Polymerisationstemperatur beträgt im Allgemeinen 40°C bis 100°C, vorzugsweise 60°C bis 90°C. Die Initiierung der Polymerisation erfolgt mit den für die Emulsions- ode Suspensionspolymerisation gebräuchlichen Initiatoren, insbesondere Redox-Initiator-Kombinationen. Beispiele für geeignete Oxidationsinitiatoren sind die Natrium-, Kalium- und Ammoniumsalze der Peroxodischwefesäure, Wasserstoffperoxid, t-Butylperoxid, t-Butylhydroperoxid, Cumolhydroperoxid, Isopropylbenzolmonohydroperoxiid und Azobisisobutyronitril. Bevorzugt werden die Natrium-, Kalium- und Ammoniumsalze der Peroxidischwefelsäure und Wasserstoffperoxid. Die genannten Initiatioren werden im allgemeinen in einer Menge von 0.01 bis 2.0 Gew.-% bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0.015 bis 3 Gew.-%. Bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solche Substanzen sind n-Dodecylmercaptan, tert.-Dodecylmercaptan, Mercaptopropionsäure, Mercaptopropionsäureethylester, Isopropanol und Acetaldehyd. Vorzugsweise werden keine regelnden Substanzen verwendet.

Vorzugsweise wird in Gegenwart von Schutzkolloiden polymerisiert. Geeignete Schutzkolloide sind teilverseifte Polyvinylakohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein Gelatine, Ligninsulfonate; synthetische Polymere wie Poly(meth)acrylsäure, Copolymerisate von (Meth)acrylaten mit carboxylfunktionelle Comonomereinheiten, Poly(meth)acrylamid, Polyvinylsulfonsäuren und deren wasserlöslichen Copolymere; Melaninformaldehydsulfonate, Naphthalinformaldehydsulfonate, Styrolmaleinsäure- und Vinylethermaleinsäure-Copolymere; kationische Polymerisate wie Poly-DADMAC.

Bevorzugte Schutzkolloide sind teilverseifte oder vollverseifte Polyvinylakohole. Besonders bevorzugt sind teilverseifte Polyvinylalkohole mit einem Hydrolysegrad von 80 bis 95 Mol-% und einer Höpplerviskosität, in 4%-iger wässriger Lösung, von 1 bis 30 mPas (Methode nach Höppler bei 20°C, DIN 53015). Besonders bevorzugt sind auch teilverseifte, hydrophob modifizierte Polyvinylalkohole mit einem Hydrolysegrad von 80 bis 95 Mol-% und einer Höpplerviskosität, in 4%-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weiter besonders bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C1- bis C4-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, bei 20°C, 4%-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4%-iger wässriger Lösung, von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im allgemeinen in einer Menge von insgesamt 1 bis 20 Gew.-% bezogen auf das Gesamtgewicht der Monomere, bei der Polymerisation zugesetzt.

Bei den erfindungsgemäßen Verfahren wird vorzugsweise ohne Zusatz von Emulgatoren polymerisiert. In Ausnahmefällen kann es von Vorteil sein, Emulgatoren einzusetzen, gegebenenfalls 1 bis 10 Gew.-%, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Trocknungshilfen sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC. Bevorzugt werden keine weiteren Schutzkolloide als Polyvinylalkohole als Trocknungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt im Allgemeinen > 35%, bevorzugt > 45%.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- bzw. Bindemittel für Textilien und Papier.

Ein wesentlicher Vorteil des Einsatzes der Strahlschlaufenreaktoren für die Heteropolymerisation ist die intensive und schnelle Durchmischung des Reaktionsmediums und ein hoher Wärme- und Stoffübergang.

Mit dem erfindungsgemäßen Verfahren können die mittleren Partikelgrößen der Polymerisate durch Variation der Verfahrensbedingungen, wie Reaktorgeometrie oder Betriebsparameter, beispielsweise Treibstrahlgeschwindigkeit oder Umwälzzahl, gezielt gesteuert werden. D.h. durch verfahrenstechnisch einfache Maßnahmen werden Polymerisate mit unterschiedlichen mittleren Partikelgrößen zugänglich. Auch die Partikelgrößenverteilungen der Polymerisate können durch die eingesetzten Verfahrensbedingungen beeinflusst werden. Nach herkömmlichen Verfahren sind zur Steuerung der mittleren Partikelgröße der Polymerisate dagegen für gewöhnlich Variationen der Rezepturen der Polymerisationsansätze erforderlich.

Besonders überraschend war, dass die beim Austritt des Polymerisationsmediums aus der Düse auftretenden hohen Scherkräfte zu keiner Koagulierung des Polymerisationsmediums führten, wie dies bei Auftreten von derart hohen Scherkräften in herkömmlichen Schlaufenreaktoren oder Rührkesselreaktoren nachteiligerweise der Fall ist. Koagulierung führt zu Reaktorverschmutzung oder sogar zur Verstopfung von Rohrreaktoren. Koagulate müssen mühsam mittels Filtration aus dem Produkt entfernt werden.

Die folgenden Beispiele dienen der detaillierten Erläuterung der Erfindung und sind in keiner Weise als Einschränkung zu verstehen.

### BEISPIEL 1 (Bsp.1): Polymerisation nach Semibatch-Verfahren

Es wurde der in Figur 1 abgebildete Strahlschlaufenreaktor mit einem Volumen von 450ml eingesetzt. Der Strahlschlaufenreaktor hatte ein Verhältnis von Reaktorhöhe zu Reaktordurchmesser H/D von 2 und ein Verhältnis von Reaktordurchmesser zu Düsendurchmesser d/D von 74. Der Strahlschlaufenreaktor wurde im Semi-Batch-Betrieb und einer Treibstrahlgeschwindigkeit von 5m/s betrieben.
Es wurden 120g einer 10%-igen wässrigen Lösung eines Polyvinylalkohols mit einem Hydrolysegrad von 88-Mol-% und einer Höppler-Viskosität bei 20°C von 4 mPas sowie 120g Vinylacetat und 30g VeoVa10 im Strahlschlaufenreaktor über den Zulauf (4) vorgelegt. Das Polymerisationsmedium wurde bei Normaldruck mittels des Wärmetauschers (8) auf 65°C temperiert und mittels der Pumpe (7) durch eine Düse der Zweistoffdüse (2) gefördert. Der Strahlschlaufenreaktor war zu diesem Zeitpunkt zu 60% seines Volumens befüllt.
Anschließend wurden über den Zulauf (4) und den zweiten Strang der Zweistoffdüse (2) folgende Stoffe innerhalb von 4 Stunden zudosiert: 96g der vorgenannten Polyvinylalkohol-Lösung, 20g 0,1%-iges tert. Butylhydroperoxid; 20g einer 0,17%-igen Ascorbinsäurelösung, 10g Veova10 und 110g Vinylacetat.
Die so erhaltene Polymerdispersion hatte einen Festgehalt von 55%. Der Restmonomergehalt betrug 1,2%, bezogen auf die Polymerdispersion. Weitere Ergebnisse sind in Tabelle 1 aufgeführt.

### Vergleichsbeispiel 2 (VBsp.2): Polymerisation in einem Rührkesselreaktor:

In einem Laborrührkessel mit einem Volumen von 500ml wurde eine Polymerisation mit einer Rezeptur, d.h. Vorlage und Dosierung, analog zu Beispiel 1 und bei einer Temperatur sowie einem Druck und einer Polymerisationsdauer wie in Beispiel 1 beschrieben durchgeführt.
Der Restmonomergehalt der so erhaltenen Dispersion betrug 1,8%, bezogen auf Dispersion. Weitere Ergebnisse sind in Tabelle aufgeführt.

**Tabelle 1:**

| | Festgehalt | mittlerer Partikeldurchmesser | | |
|---|---|---|---|---|
| | | Dw*⁾ | Dn*⁾ | Dw/Dn |
| Bsp.1 | 55% | 0, 677 µm | 0,355 µm | 1,91 |
| VBsp.2 | 55% | 1,330 µm | 0,433 µm | 3,07 |

| | | | | |
|---|---|---|---|---|
| ^{*)} bestimmt mit dem Messgerät Beckmann Coulter® LS nach ISO 13320. | | | | |

Aus Tabelle 1 geht hervor, dass das erfindungsgemäße Verfahren (Bsp.1) im Vergleich zu herkömmlichen Verfahren (VBsp.2) zu Polymerisaten mit kleineren mittleren Partikeldurchmessern Dw führt. Zudem ist die Partikelgrößenverteilung enger, wie durch das kleinere Verhältnis Dw/Dn zu erkennen ist.

### Beispiel 3: Variieren der Treibstrahlgeschwindigkeit

Analog zu Beispiel 1, mit dem Unterschied, dass die Treibstrahlgeschwindigkeit 10 m/s betrug.

Durch Variation der Treibstrahlgeschwindigkeit an der Düse (2) des Strahlschlaufenreaktors können die mittleren Partikeldurchmesser Dw der Polymerisate signifikant beeinflusst werden. Die Ergebnisse sind in Tabelle 2 aufgeführt.

**Tabelle 2:**

| | Treibstrahlgeschwindigkeit | mittlerer Partikeldurchmesser Dw |
|---|---|---|
| Beispiel 1 | 5 m/s | 0,677 µm |
| Beispiel 3 | 10 m/s | 0,358 µm |

| | | |
|---|---|---|
| ^{*)} bestimmt mit dem Messgerät Beckmann Coulter® LS nach ISO 13320. | | |

### BEISPIEL 4: Kontinuierliche Polymerisation

Analog zu Beispiel 1 wurde im Strahlschlaufenreaktor zunächst eine Polymerdispersion nach einem Semibatch-Verfahren hergestellt. Nach 4 Stunden Polymerisationszeit betrug der Feststoffgehalt 55%. Anschließend wurden die im folgenden aufgeführten Komponenten mit den angegebenen Dosiergeschwindigkeiten über die Dosierungen (6) zudosiert und der Strahlschlaufenreaktor in eine kontinuierliche Betriebsweise überführt:
10%-ige wässrige Polyvinylalkohol-Lösung mit einem Hydrolysegrad von 88-Mol-% und einer Höpplerviskosität bei 20°C von 4 mPas: 70ml/h,
Vinylacetat: 84 ml/h,
Veova10: 14,9 ml/h,
tert.Butylhyroperoxid (0,1%ig): 6,6 ml/h,
Ascorbinsäure (0,17%ig): 6,6 ml/h.

Der Strahlschlaufenreaktor wurde für 8 Stunden kontinuierlich betrieben. Am Produktaustritt (9) wurde währenddessen Polymerisationsmedium, d.h. eine Polymerdispersion, mit einem Festgehalt von 55% und einem mittleren Partikeldurchmesser Dw von 0,730µm entnommen (bestimmt mit dem Messgerät Beckmann Coulter® LS nach ISO 13320).

### Vergleichsbeispiel 5:

In einer Rührkesselkaskade bestehend aus zwei Rührkesseln mit einem Volumen von je 500ml wurde eine Polymerisation analog Beispiel 4 durchgeführt.
Die Rührkessel wurden mit der Dispersion aus Beispiel 4 befüllt, und es wurden die folgenden Dosierungen gestartet:

### Rührkessel 1:

10%-ige wässrige Polyvinylalkohol-Lösung mit einem Hydrolysegrad von 88-Mol-% und einer Höpplerviskosität bei 20°C von 4 mPas: 70ml/h,
Vinylacetat: 84 ml/h,
Veova10: 14,9 ml/h,
tert.Butylhyroperoxid (0,1%ig): 6,6 ml/h,
Ascorbinsäure (0,17%ig): 6,6 ml/h.

### Rührkessel 2:

tert.Butylhyroperoxid (0,1%ig): 12,2 ml/h,
Ascorbinsäure (0,17%ig): 12,2 ml/h.

Die Rührkesselkaskade wurde für 8 h kontinuierlich betrieben.

Die erhaltenen Polymere wiesen einen mittleren Partikeldurchmesser Dw von 2,2 µm auf (bestimmt mit dem Messgerät Beckmann Coulter® LS nach ISO 13320).

## Patentansprüche

1. Verfahren zur Herstellung von Polymerisaten in Form deren wässrigen Dispersionen oder in Wasser redispergierbaren Pulvern durch radikalisch initiierter Heterophasenpolymerisation von einem oder mehreren ethylenisch ungesättigten Monomeren und gegebenenfalls anschließender Trocknung der dabei erhaltenen Polymerdispersionen, **dadurch gekennzeichnet, dass** die Heterophasenpolymerisation in einem Strahlschlaufenreaktor durchgeführt wird.

2. Verfahren nach Anspruch 1, **dadurch gekennzeichnet, dass** der Strahlschlaufenreaktor ein oder mehrere Düsen (2), ein oder mehrere Einsteckrohre (3), gegebenenfalls einen oder mehrere Zuläufe (4), gegebenenfalls einen oder mehrere Produktaustritte (9), gegebenenfalls eine oder mehrere Prallplatten (10), gegebenenfalls ein oder mehrere externe Kreisläufe (5) und gegebenenfalls weitere Bauten enthält.

3. Verfahren nach Anspruch 1 oder 2, **dadurch gekennzeichnet, dass** die Treibstrahlgeschwindigkeit 3 bis 25 m/s beträgt.

4. Verfahren nach Anspruch 1 bis 3, **dadurch gekennzeichnet, dass** der Strahlschlaufenreaktor nach Batch-, Semibatch- oder kontinuierlichen Verfahren, gegebenenfalls mit Rückführung, betrieben wird.

5. Verfahren nach Anspruch 1 bis 4, **dadurch gekennzeichnet, dass** der Strahlschlaufenreaktor in eine Kaskade von Reaktoren eingebaut ist umfassend zwei oder mehr Strahlschlaufenreaktoren; oder ein oder mehrere Strahlschlaufenreaktoren und ein oder mehrere Strahlzonen-Schlaufenreaktoren; oder ein oder mehrere Strahlschlaufenreaktoren und ein oder mehrere Airliftschlaufenreaktoren; oder ein oder mehrere Strahlschlaufenreaktore und einen oder mehrere Rührkessel.

6. Verfahren nach Anspruch 1 bis 5, **dadurch gekennzeichnet, dass** die Heterophasenpolymerisation nach Emulsions- oder Suspensionspolymerisationsverfahren durchgeführt wird.

7. Verfahren nach Anspruch 1 bis 6, **dadurch gekennzeichnet, dass** die ethylenisch ungesättigten Monomere ausgewählt werden aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

8. Verfahren nach Anspruch 1 bis 7, **dadurch gekennzeichnet, dass** die Heterophasenpolymerisation in Gegenwart von Schutzkolloiden durchgeführt wird ausgewählt aus der Gruppe umfassend Polyvinylakohole, Polyvinylpyrroliodene, Polyvinylacetale, Polysaccharide in wasserlöslicher Form, Cellulosen und deren Carboxymethyl-, Methyl-, Hydroxyethyl-, Hydroxypropyl-Derivate, Proteine, Poly(meth)acrylsäure, Copolymerisate von (Meth)acrylaten mit carboxylfunktionellen Comonomereinheiten, Poly(meth)acrylamid, Polyvinylsulfonsäuren und deren wasserlösliche Copolymere; Melaninformaldehydsulfonate, Naphthalinformaldehydsulfonate, Styrolmealeinsäure- und Vinylethermaleinsäure-Copolymere, kationische Polymerisate.

## Claims

1. Process for preparing polymers in the form of their aqueous dispersions or water-redispersible powders by free-radically initiated heterophase polymerization of one or more ethylenically unsaturated monomers and optionally subsequent drying of the resulting polymer dispersions, **characterized in that** the heterophase polymerization is carried out in a jet loop reactor.

2. Process according to Claim 1, **characterized in that** the jet loop reactor contains one or more nozzles (2), one or more plug-in tubes (3), optionally one or more feed lines (4), optionally one or more product outlets (9), optionally one or more impingement plates (10), optionally one or more external circuits (5) and optionally further structures.

3. Process according to Claim 1 or 2, **characterized in that** the driving jet velocity is from 3 to 25 m/s.

4. Process according to any of Claims 1 to 3, **characterized in that** the jet loop reactor is operated by batch, semibatch or continuous processes, optionally with recirculation.

5. Process according to any of Claims 1 to 4, **characterized in that** the jet loop reactor is built into a cascade of reactors comprising two or more jet loop reactors; or one or more jet loop reactors and one or more jet zone loop reactors; or one or more jet loop reactors and one or more airlift loop reactors; or one or more jet loop reactors and one or more stirred vessels.

6. Process according to any of Claims 1 to 5, **characterized in that** the heterophase polymerization is carried out by emulsion or suspension polymerization processes.

7. Process according to any of Claims 1 to 6, **characterized in that** the ethylenically unsaturated monomers are selected from the group consisting of vinyl esters, (meth)acrylic esters, vinylaromatics, olefins, 1,3-dienes and vinyl halides and optionally further monomers which are copolymerizable therewith.

8. Process according to any of Claims 1 to 7, **characterized in that** the heterophase polymerization is carried out in the presence of protective colloids selected from the group consisting of polyvinyl alcohols, polyvinylpyrrolidones, polyvinyl acetals, polysaccharides in water-soluble form, celluloses and carboxymethyl, methyl, hydroxyethyl, hydroxypropyl derivatives thereof, proteins, poly(meth)acrylic acid, copolymers of (meth)acrylates with carboxyl-functional comonomer units, poly(meth)acrylamide, polyvinylsulfonic acids and water-soluble copolymers thereof; melamine-formaldehyde sulfonates, naphthalene-formaldehyde sulfonates, styrene-maleic acid and vinyl ether-maleic acid copolymers, cationic polymers.

## Revendications

1. Procédé de fabrication de polymères sous la forme de leurs dispersions aqueuses ou de poudres redispersibles dans l'eau par polymérisation en phase hétérogène initiée par voie radicalaire d'un ou de plusieurs monomères éthyléniquement insaturés, puis éventuellement séchage des dispersions de polymères obtenues, **caractérisé en ce que** la polymérisation en phase hétérogène est réalisée dans un réacteur à boucle et à jet.

2. Procédé selon la revendication 1, **caractérisé en ce que** le réacteur à boucle et à jet contient une ou plusieurs buses (2), un ou plusieurs tubes d'insertion (3), éventuellement une ou plusieurs entrées (4), éventuellement une ou plusieurs sorties de produits (9), éventuellement une ou plusieurs plaques de déviation (10), éventuellement un ou plusieurs circuits externes (5) et éventuellement des structures supplémentaires.

3. Procédé selon la revendication 1 ou 2, **caractérisé en ce que** la vitesse du jet d'entraînement est de 3 à 25 m/s.

4. Procédé selon les revendications 1 à 3, **caractérisé en ce que** le réacteur à boucle et à jet est exploité selon des procédés discontinus, semi-discontinus ou continus, éventuellement avec recyclage.

5. Procédé selon les revendications 1 à 4, **caractérisé en ce que** le réacteur à boucle et à jet est incorporé dans une cascade de réacteurs comprenant deux réacteurs à boucle et à jet ou plus ; ou un ou plusieurs réacteurs à boucle et à jet et un ou plusieurs réacteurs à boucle et à zones de jet ; ou un ou plusieurs réacteurs à boucle et à jet et un ou plusieurs réacteurs à boucle et à agitation pneumatique ; ou un ou plusieurs réacteurs à boucle et à jet et une ou plusieurs cuves agitées.

6. Procédé selon les revendications 1 à 5, **caractérisé en ce que** la polymérisation en phase hétérogène est réalisée par un procédé de polymérisation en émulsion ou en suspension.

7. Procédé selon les revendications 1 à 6, **caractérisé en ce que** les monomères éthyléniquement insaturés sont choisis dans le groupe comprenant les esters de vinyle, les esters de l'acide (méth)acrylique, les composés aromatiques de vinyle, les oléfines, les 1,3-diènes et les halogénures de vinyle, et éventuellement d'autres monomères copolymérisables avec ceux-ci.

8. Procédé selon les revendications 1 à 7, **caractérisé en ce que** la polymérisation en phase hétérogène est réalisée en présence de colloïdes protecteurs choisis dans le groupe comprenant les alcools polyvinyliques, les polyvinylpyrrolidones, les polyvinylacétals, les polysaccharides sous forme soluble dans l'eau, les celluloses et leurs dérivés carboxyméthyle, méthyle, hydroxyéthyle, hydroxypropyle, les protéines, les acides poly(méth)acryliques, les copolymères de (méth)acrylates avec des unités comonomères à fonction carboxyle, le poly(méth)acrylamide, les acides polyvinylsulfoniques et leurs copolymères solubles dans l'eau ; les sulfonates de mélanine-formaldéhyde, les sulfonates de naphtaline-formaldéhyde, les copolymères styrène-acide maléique et éther de vinyle-acide maléique, les polymères cationiques.
